# EUROPÄISCHE PATENTSCHRIFT

(11) **EP 0 261 465 B1**
(45) Veröffentlichungstag und Bekanntmachung des Hinweises auf die Patenterteilung: **09.11.1994**
(21) Anmeldenummer: 87112840.1
(22) Anmeldetag: 03.09.1987
(51) Int. Cl.: B23B 27/06

(54) **Gewinde-Fräswerkzeug**
Thread-milling tool
Outil de fraisage des filetages

(30) Priorität: 23.09.1986 DE 3632296
(43) Veröffentlichungstag der Anmeldung: 30.03.1988
(73) Patentinhaber: VARGUS Ltd., Nahariyya 22311 (IL)
(72) Erfinder: Zaengerle, Eduard, CH-Baar, Zug (CH)
(74) Vertreter: Patentanwälte Ruff, Beier, Schöndorf und Mütschele

(56) Entgegenhaltungen:
- EP-A- 0 145 167
- GB-A- 130 717
- GB-A- 2 096 509
- US-A- 2 004 333
- US-A- 4 312 250

## Beschreibung

Die Erfindung betrifft ein Gewinde-Fräswerkzeug nach dem Oberbegriff des Patentanspruches 1 und eine Gewinde-Fräsplatte nach dem Oberbegriff des Patentanspruches 12. Solche Werkzeuge können einen eine Rotations-Fräsachse bestimmenden Fräserschaft aufweisen, der mit einer Aufnahme mit Ausrichtflächen für die Anlage einer einteilig vielzahnigen, als Wendeplatte ausgebildeten Gewinde-Fräsplatte versehen ist. Diese ist entsprechend dem Gewindeprofil an mindestens einer Kantenfläche über die Plattendicke gezahnt und bildet mit einer Plattenkante der jeweiligen Kantenfläche eine Gewinde-Fräskante. Diese liegt an der zugehörigen ersten Plattenseite und ist von einer Schneidenbrustfläche begrenzt. Diese wiederum ist durch eine gegenüber der Plattenebene im wesentlichen geneigte Spanleitfläche gebildet.

Durch die EP-A-0 145 167 ist ein Gewinde-Fräswerkzeug bekannt geworden, das an einer einzigen Plattenseite an mehreren Kanten der Gewinde-Fräsplatte mit Gewinde-Fräskanten ausgebildet ist, so daß es durch Drehung um eine zu seiner Plattenebene rechtwinklige Achse gewendet werden kann, wenn ein Satz von Fräszähnen verbraucht ist. Derartige Gewinde-Fräswerkzeuge können sowohl zur Herstellung von Innengewinden als auch von Außengewinden verwendet werden, wobei das Fräswerkzeug in zur Werkstückachse etwa paralleler, jedoch exzentrischer, Anordnung ausgerichtet zur Ausführung der Hauptarbeitsbewegung in relativ hohe Drehzahl versetzt und das Werkstück Zur Durchführung der Vorschubbewegung langsam um die Werkstückachse gedreht wird.

Die Gewinde-Fräskante kann dabei mindestens so lang wie die Länge des herzustellenden Gewindes sein, so daß das Werkstück bis zur Fertigstellung des Gewindes nur im wesentlichen eine einzige Umdrehung ausführt und hierbei simultan das Fräswerkzeug oder das Werkstück je Werkstück-Umdrehung um eine Gewindesteigung axial verfahren wird. Die Gewinde-Fräskante kann aber auch kürzer als das herzustellende Gewinde sein, wobei dann zweckmäßig zunächst ein erster, der Länge der Gewinde-Fräskante entsprechender Teilabschnitt des Gewindes hergestellt, dann das Fräswerkzeug und das Werkstück gegeneinander etwa um die Länge der Gewinde-Fräskante gegeneinander verfahren werden und dann ein weiterer Gewindeabschnitt hergestellt wird, bis das Gewinde auf der vorbestimmten Länge fertiggestellt ist; insbesondere bei einer solchen Verfahrensweise ist die Verwendung numerisch gesteuerter Fräsmaschinen zweckmäßig.

Die Gewinde-Fräskanten solcher Fräswerkzeuge sind, insbesondere im Falle feiner Präzisionsgewinde, äußerst empfindlich, weshalb die Anordnung mehrerer Gewinde-Fräskanten an ein und derselben Plattenseite insofern problematisch sein kann, als die nicht im Einsatz stehenden Fräskanten während der Arbeit der im Einsatz befindlichen Fräskante leicht beschädigt werden können. Außerdem müssen, um zwei Gewinde-Fräskanten zu erhalten, zwei Kantenflächen der Gewinde-Fräsplatte gezahnt bearbeitet sein, was insbesondere auch die genau reproduzierbare Ausrichtung der Fräsplatte gegenüber dem Fräserschaft erschwert, da sich hierfür gezahnte Kantenflächen weniger gut eignen. Ferner kann es problematisch sein, daß bei der bekannten Ausbildung, um nach dem Wenden gleiche Maßhaltigkeitsverhältnisse vorzufinden, die mit Gewinde-Fräskanten versehenen Plattenkanten gleich lang sein sollten, was bei relativ großer Gewindelänge auf eine entsprechend große Radialerstreckung der Gewinde-Fräsplatte gegenüber der Fräsachse hinausläuft und im Falle kleiner Innengewinde-Durchmesser zu Schwierigkeiten führt.

Durch die US-A-4 312 250 ist ein Fräswerkzeug bekanntgeworden, das nicht zur Gewindeherstellung dient, sondern wie übliche Drehstähle geradlinige Schneidkanten aufweist. Bei der Gewindeherstellung ergeben sich ganz andere Schneidverhältnisse als bei solchen Drehstählen mit geradlinig und kontinuierlich durchgehender Schneidkante, weshalb die Verhältnisse bei einer geradlinigen Schneidkante nicht auf eine gezahnte Gewinde-Schneidkante übertragen werden können.

Der Erfindung liegt die Aufgabe zugrunde, ein Gewinde-Fräswerkzeug der genannten Art zu schaffen, das bei einfachem Aufbau unterschiedliche Ausgestaltungen für vielfältige Einsatzmöglichkeiten erlaubt. Das Fräswerkzeug soll ferner leicht zu handhaben, einfach nachzuschärfen und kompakt auszubilden sein.

Insbesondere die zuerst genannte Aufgabe wird bei einem Gewinde-Fräswerkzeug der eingangs beschriebenen Art gemäß der Erfindung durch die Merkmale des Patentanspruches 1 bzw. des Patentanspruches 12 gelöst. Zweckmäßig ist auch an der zweiten Plattenseite mindestens eine gezahnte Gewinde-Fräskante vorgesehen, deren Schneidenbrustfläche durch eine gegenüber der Plattenebene der Fräsplatte geneigte Spanleitfläche gebildet ist. Diese Gewinde-Fräskante liegt beim Einsatz der anderen Gewinde-Fräskante verdeckt an der rückwärtigen Plattenseite der Fräsplatte und ist dadurch vor Beschädigungen weitestgehend geschützt. Durch Wenden der Fräsplatte um eine zu ihrer Mittelebene parallele Achse läßt sich diese Fräskante jederzeit leicht in Einsatzstellung bringen. Durch die Spanleitfläche ist auch ihr Schneidverhalten äußerst günstig, so daß sehr hohe Oberflächengenauigkeiten erzielt werden können.

Es ist denkbar, die Fräskanten auf beiden Plattenseiten an unterschiedlichen Kantenflächen vorzusehen, so daß außer einer Wendung um eine zur Mittelebene der Platte parallele Achse auch eine Wendung um eine hierzu rechtwinklige Achse der Fräsplatte erforderlich ist. Bei einer solchen Ausbildung können die Fräskanten hinsichtlich ihrer Zahnungsmaße auch auf einfache Weise unterschiedlich beispielsweise in dem Sinn ausgebildet werden, daß sie unterschiedlichen Gewinden entsprechen oder einmal als Vorfräs- und zum anderen als Feinstbearbeitungs-Fertigfräskanten ausgebildet sind. Eine besonders vorteilhafte Ausgestaltung ergibt sich jedoch, wenn zwei gleiche Gewinde-Fräskanten durch die beiden Plattenkanten mindestens einer Kantenfläche gebildet sind und wenn die Spanleitflächen an beiden Plattenseiten zur Platten-Mittelebene im wesentlichen spiegelsymmetrisch gleich ausgebildet sind. Dadurch ist eine Wendung ausschließlich durch Drehen um eine zur Plattenebene parallele und zur zugehörigen Kantenfläche rechtwinklige Achse möglich, wobei es besonders vorteilhaft ist, wenn Gewinde-Fräskanten nur an einer einzigen Kantenfläche oder zumindest nicht an solchen Kantenflächen vorgesehen sind, die im Winkel aneinanderstoßen, da dann in jedem Fall die im Winkel an die gezahnte Kantenfläche anstoßenden Kantenflächen der Fräsplatte als glatte bzw. ebene Ausrichtskanten eingesetzt werden können.

Geht die Zahnung der Kantenfläche über die Plattendicke gleichförmig durch, so bedarf es zur Ausbildung zweier gleicher Fräskanten lediglich der Bearbeitung einer einzigen Kantenfläche. Die Gleichartigkeit der beiden Fräskanten kann noch weiter dadurch erhöht werden, daß entweder die Scheitel- oder die Bodenflächen der Zahnung der Kantenfläche oder aber sowohl die Scheitel- als auch die Bodenflächen jeweils in einer zur Plattenebene rechtwinkligen Ebene liegen, was auch die Werkzeugausrichtung nach dem Wenden insbesondere dann wesentlich erleichtert, wenn die beiden Plattenseiten zueinander ebenenparallele Ausrichtflächen bilden bzw. als entsprechende ebene und ggf. glatte Flächen ausgebildet sind.

Des weiteren ist es denkbar, daß die Zahnung in Ansicht auf die zugehörige Kantenfläche in einem Schrägverlauf vorgesehen ist, der beispielsweise so gewählt sein kann, daß die Zähne an einer Plattenseite um eine, zwei oder mehrere Zahnteilungen gegenüber den Zähnen an der anderen Plattenseite versetzt sind, so daß nach dem Wenden trotzdem dieselbe Werkzeugausrichtung maßhaltig ist. Da dies jedoch in aller Regel nur bei solchen Gewindeprofilen möglich ist, die trotzdem einen ausreichenden Freiwinkel gegenüber den Längsflanken der Zahnung herbeiführen, ergibt sich eine noch weitere Vereinfachung, wenn die Zahnung in Ansicht auf die Kantenfläche rechtwinklig zur Plattenebene über die Plattendicke durchgeht.

Je nach Gewindeform kann es auch vorteilhaft sein, wenn die Zahnung über die Länge der Kantenfläche ungleichförmig durchgeht, beispielsweise zu einem Ende der Kantenfläche hin in der Scheitelhöhe abnimmt, so daß ein konisch auslaufendes Gewinde hergestellt werden kann. Zur vereinfachten Bearbeitung, Wartung und Einstellung des Werkzeuges ist es jedoch vorteilhaft, wenn die Zahnung über die Länge der Kantenfläche gleichförmig durchgeht, wobei auch in diesem Fall ein schräg auslaufendes Gewinde z.B. dadurch hergestellt werden kann, daß die Werkzeugachse gegenüber der Werkstückachse unter einem kleinen Winkel schräg gestellt wird.

Damit das Fräswerkzeug nach Wenden der Fräsplatte ohne Neueinstellung in quasi identischer Ausrichtung weiter verwendet werden kann, ist es vorteilhaft, wenn die Zahnung spiegelsymmetrisch zur Mitte der Länge der zugehörigen Kantenfläche ausgebildet ist. Die Zahnungen an beiden Plattenkanten der jeweiligen Kantenfläche liegen hinsichtlich ihrer Zahngeometrie identisch zu den zugehörigen Ausrichtflächen der Fräsplatte.

Eine hohe Schnittgeschwindigkeit bei sauberen Spanablauf ist vor allem dann zu erzielen, wenn die Fräskante einen spitzen Schneidenwinkel zwischen 60° und 85°, vorzugsweise etwa 75° aufweist. Dies kann z.B. auf einfache Weise dadurch erreicht werden, daß die Spanleitfläche im wesentlichen unter einem spitzen, sich zur zugehörigen Kantenfläche öffnenden Winkel zwischen 5° und 30°, vorzugsweise etwa 15°, zu der zwischen den beiden Plattenseiten liegenden Platten-Mittelebene liegt. Durch die Spanleitflächen auf beiden Seiten der Kantenfläche weist die Schneidplatte im Bereich dieser Kantenfläche ein höchstens bis an die Ebenen ihrer Plattenseiten reichendes, insbesondere symmetrisches Schwalbenschwanzprofil auf, auf das z.B. zum Schutz der Fräskanten eine entsprechend profilierte, beispielsweise leistenförmige Haube aus Kunststoff oder dgl. aufgeschoben werden kann und das auch eine sehr günstige Aufbewahrung und Bereithaltung von Fräsplatten in beispielsweise stehenden Schwalbenschwanz-Aufnahmenuten einer Haltevorrichtung ermöglicht. Des weiteren ist es möglich, beide Fräskanten in einem einzigen Durchgang durch gleichzeitige Bearbeitung beider Spanleitflächen in einem einzigen Durchgang nachzuschärfen, so daß sich eine äußerst einfache Instandhaltung des Werkzeuges ergibt.

Das Schneidverhalten sowie die Nachschärfbarkeit können noch weiter dadurch verbessert werden, daß die Spanleitfläche im Anschluß an die Fräskante, insbesondere über den größten Teil ihrer Breite bzw. bis über die Bodenflächen der Zahnung hinaus, im wesentlichen eben ausgebildet ist. Damit die Späne noch besser ablaufen, steigt die Spanleitfläche zweckmäßig im Abstand von der Fräskante bzw. von den Bodenflächen der Zahnung zur zugehörigen Plattenseite unter einem gegenüber dem Neigungswinkel im Bereich der Fräskante größeren Winkel von insbesondere etwa 45° an. Um Kerbwirkungen zu vermeiden und einen noch glatteren bzw. gleichförmigeren Abfluß der Späne zu erzielen, geht die Spanleitfläche im Abstand von der Fräskante im wesentlichen tangential in eine konkave Ausrundung über, deren Mittelachse vorzugsweise etwa in der Ebene der zugehörigen Plattenseite liegt und die auch zweckmäßig in den im Abstand von der Fräskante liegenden ansteigenden, ebenfalls streifenförmig ebenen Abschnitt der Spanleitfläche tangential, also kantenfrei übergeht.

Es hat sich als vorteilhaft erwiesen, wenn die Gesamtbreite der Spanleitfläche etwa halb so groß wie die Plattendicke der Gewinde-Fräsplatte ist, so daß sich nur eine sehr geringe Schwächung der Plattendicke ergibt. Trotz guten Spanflusses im Bereich der Bodenflächen der Zahnung kann eine solch geringe Breite der Spanleitfläche auch dadurch erreicht werden, daß die tiefste Stelle der Spanleitfläche von den Bodenflächen der Zahnung etwa gleich weit wie von der von der Zahnung entfernten Begrenzung der Spanleitfläche entfernt ist.

Insbesondere wenn ausschließlich nur eine einzige Kantenfläche der Fräsplatte Fräskanten bildet, ist die Fräskante zweckmäßig an der längsten Kantenfläche der Fräsplatte vorgesehen, d.h., daß die Axialerstreckung der Fräsplatte in Bezug auf das Fräswerkzeug größer als die zugehörige Radialerstreckung ist. Trotzdem läßt sich eine sehr gute Ausrichtung der Fräsplatte erzielen, wenn sie nicht, wie auch denkbar, dreieckförmig, sondern trapezförmig ausgebildet ist, wobei zweckmäßig ein spitzer Trapezwinkel von vorzugsweise etwa 60° vorgesehen ist, d.h., daß die durch Kantenflächen der Fräsplatte gebildeten Ausrichtflächen unter einem Winkel von etwa 60° zueinander liegen. Die Spanleitfläche geht über die gesamte Länge der zugehörigen Kantenfläche durch.

Damit die Fräsplatte sicher und unkompliziert gegenüber dem Fräserschaft trotz kompakter Ausbildung festgelegt werden kann, ist die Fräsplatte unmittelbar benachbart zur Spanleitfläche von einer Durchgangsöffnung für einen Spannbolzen durchsetzt. Diese Durchgangsöffnung ist zweckmäßig zu beiden Plattenseiten gleichförmig kegelstumpfförmig unter einem spitzen Kegelwinkel von beispielsweise etwa 60° derart erweitert, daß ihre in der jeweiligen Plattenseite liegende Begrenzungskante nahezu tangential von der Spanleitfläche berührt ist. Bei an den Ausrichtflächen des Fräserschaftes anliegenden, kantenseitigen Ausrichtflächen der Fräsplatte liegt die Durchgangsöffnung bzw. liegen deren kegelstumpfförmige Endabschnitte zweckmäßig geringfügig exzentrisch zu einer Spannbolzen-Aufnahmeöffnung, wie einer Gewindebohrung, im Fräserschaft, so daß beim Festziehen eines mit einem beispielsweise kegelstumpfförmigen Kopf an der kegelstumpfförmigen Erweiterung anliegenden Spannbolzens die Fräsplatte gegen die Ausrichtflächen des Fräserschaftes belastet bzw. gedrückt wird.

Zur geschützten Aufnahme der Fräsplatte ist es auch vorteilhaft, wenn die Aufnahme für die Fräsplatte durch eine an deren Außenform angepaßte Vertiefung im Fräserschaft gebildet ist, die vorzugsweise ausschließlich mit ihrer Bodenfläche und zwei im Winkel zueinander liegenden Randflächen die Ausrichtflächen für die Fräsplatte bildet.

Um günstige Schneiden-, Span- und Freiwinkel der jeweils im Einsatz befindlichen Fräskante selbst bei engsten Raumverhältnissen und bei einfacher Einstellbarkeit zu erzielen, liegt die Fräsachse zwischen den Ebenen der Plattenseiten der Fräsplatte, vorzugsweise etwa in der Ebene der Spanleitfläche der in Fräslage stehenden Fräskante. Außerdem kann die Fräsachse in einer gegenüber der Plattendicke geringeren Nähe zu der von der gezahnten Kantenfläche abgekehrten und vorzugsweise dieser parallelen Plattenkante oder sogar im wesentlichen in dieser Plattenkante liegen.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können. Ein Ausführungsbeispiel der Erfindung ist in den Zeichnungen dargestellt und wird im folgenden näher erläutert. In den Zeichnungen zeigen:
- Fig. 1: ein erfindungsgemäßes Gewinde-Fräswerkzeug in Ansicht auf die für den Einsatz bestimmte Fräskante,
- Fig. 2: das Fräswerkzeug gemäß Fig. 1 in Ansicht auf die der Fräskante zugehörige Kantenfläche,
- Fig. 3: das Fräswerkzeug gemäß Fig. 1 in Ansicht auf die vordere Stirnfläche,
- Fig. 4: die Fräsplatte in einer Lage gemäß Fig. 1, jedoch in vergrößerter Darstellung,
- Fig. 5: die Fräsplatte gemäß Fig. 4, teilweise im Schnitt und
- Fig. 6: ein Ausschnitt der Fig. 5 in vergrößerter Darstellung.

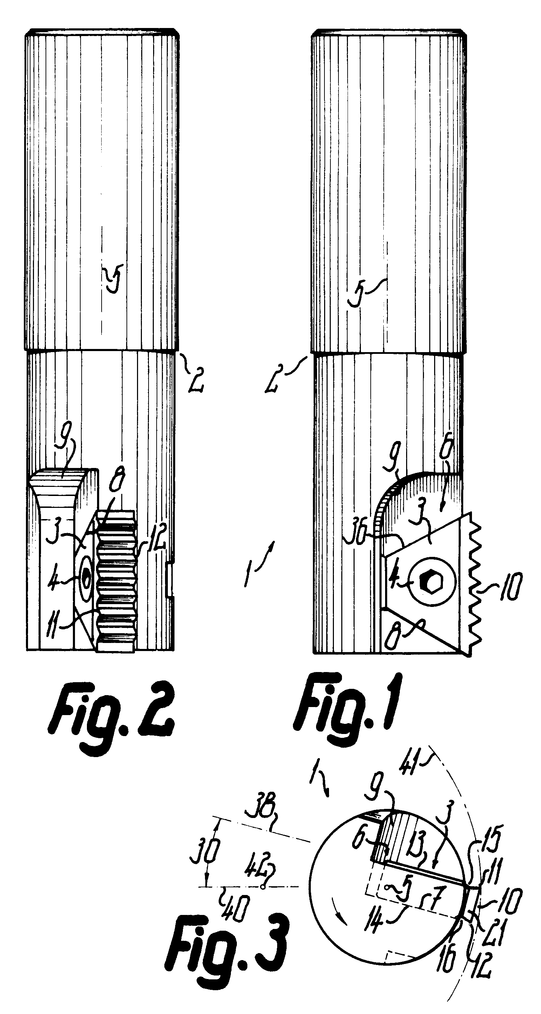

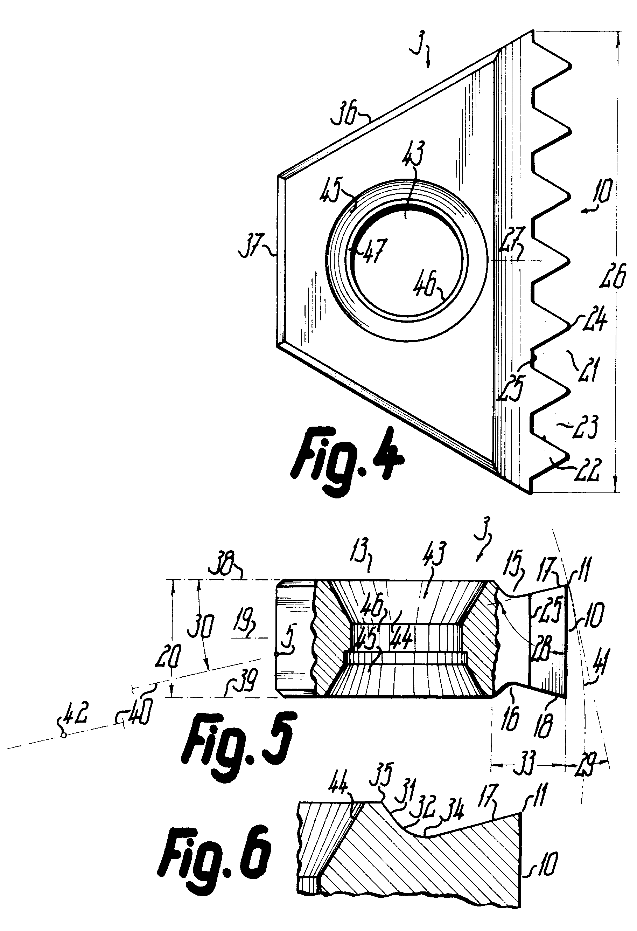

Wie die Figuren 1 bis 6 zeigen, kann ein erfindungsgemäßes Gewinde-Fräswerkzeug 1 aus nur drei einstückigen Teilen, nämlich einem im wesentlichen zylindrischen Fräserschaft 2, einer im wesentlichen konstant dicken Fräsplatte 3 und einem mit einem Senkkopf sowie einem metrischen Gewindeschaft versehenen Spannbolzen 4 bestehen.

Der in der Fräsachse 5 liegende Fräserschaft 2, der an seinem Arbeitsende etwa auf der Hälfte seiner Länge gegenüber seinem Spannende im Durchmesser geringfügig reduziert ist, weist unmittelbar benachbart zu seiner vorderen Stirnfläche eine nur etwa über die Hälfte der Länge des Arbeitsendes reichende Aufnahme 6 für die Fräsplatte 3 auf. Die Aufnahme 6 ist durch eine Ausnehmung in einer annähernd in einer Axialebene des Fräserschaftes 2 liegenden ebenen Bodenfläche einer in Ansicht auf die Bodenfläche winkelförmig begrenzten, bis zur vorderen Stirnseite des Fräserschaftes 2 und über etwas mehr als die Hälfte der Länge von dessen Arbeitsende reichenden Spankammer 9 gebildet, deren zur Fräserachse 5 rechtwinklige Breite nur geringfügig größer als die zugehörige Erstreckung des in den Fräserschaft 2 eingreifenden Teiles der Fräsplatte 3 ist. Die Tiefe der Aufnahme 6 ist annähernd gleich bzw. nur geringfügig kleiner als die Plattendicke der Fräsplatte 3, wobei die zur Bodenfläche der Spankammer 9 parallele Bodenfläche der Aufnahme 6 eine von drei im Winkel zueinander liegenden Ausrichtflächen 7,8, nämlich die zur Plattenkontur der Fräsplatte 3 etwa flächengleiche, durchgehend ebene Ausrichtfläche 7 bildet, an welcher die Fräsplatte 3 mit einer Plattenseite anliegt und welche von der Gewindebohrung für die Aufnahme des Spannbolzens 4 durchsetzt ist. Sie beiden anderen Ausrichtflächen 8 sind durch zwei im spitzen Winkel zueinander liegende, zum Außenumfang des Fräserschaftes 2 divergierende Randflächen der Aufnahme 6 gebildet, von denen die benachbart zum vorderen Ende des Fräserschaftes 2 liegende Ausrichtfläche 8 mit ihrem radial äußeren Ende annähernd bis an die zugehörige vordere, zur Fräserachse 5 rechtwinklige Stirnfläche des Fräserschaftes 2 reicht, während das entsprechende Ende der dahinter und gegenüberliegenden Ausrichtfläche 8 im Abstand vom zugehörigen Ende der Spankammer 9 liegt.

Die, in Ansicht auf ihre Plattenseiten Trapezform aufweisende Fräsplatte 3 weist ausschließlich an ihrer längsten, durch die Basiskante der Trapezform gebildeten Kantenfläche 10 zwei voneinander abgekehrte bzw. an beiden Plattenseiten 13,14 liegende Fräskanten 11,12 auf, die jeweils gegenüber der Ebene der zugehörigen Plattenseite 13,14 nur geringfügig zurückversetzt sind und die hinsichtlich ihrer geometrischen Form identisch ausgebildet sind. Jeder Fräskante 11,12 ist eine ausgerundet, stumpfwinklig winkelnutförmige Spanleitfläche 15,16 zugeordnet, deren ebener, an die gezahnten Fräskanten 11,12 anschließender Abschnitt die Schneidenbrustflächen 17, 18 bildet. Die Fräsplatte 3 weist dadurch entlang der Kantenfläche 10 ein schwalbenschwanzförmiges Randprofil auf, dessen geringste Dicke nur etwa um ein Viertel kleiner als die Platten-Dicke 20 der Fräsplatte 3 ist, wobei das Schwalbenschwanzprofil symmetrisch zur Platten-Mittelebene 19 ausgebildet ist.

Die unter einem spitzen Flankenwinkel von 60° über die Länge der Kantenfläche 10 gleichförmig gezahnten Fräskanten 11,12 sind durch eine über die Platten-Dicke 20 an der Kantenfläche 10 durchgehende Zahnung 21 gebildet, wobei die Zähne 22 und die Zahnlücken 23 dieser Zahnung 21 ununterbrochen über die Höhe der Kantenfläche bzw. der jeweils zugehörigen Dicke der Fräsplatte 3 durchgehen. Sowohl die Zahn-Scheitel 24 einerseits wie auch die Bodenflächen 25 der Zahnlücken 23 andererseits liegen jeweils in einer gemeinsamen, zur Längsrichtung der Kantenfläche 10 parallelen und zur Platten-Mittelebene 19 rechtwinkligen Ebene, wobei die Zahn-Scheitel 24 geringfügig abgerundet und die Bodenflächen 25 derart eben sind, daß sie stumpfwinklig in die ebenen Zahnflanken übergehen. Die Tiefe der Zahnlücken 23 ist etwa gleich der Hälfte der Gesamtbreite der jeweiligen Spanleitfläche, gemessen zwischen den Zahnscheiteln und der davon abgekehrten Begrenzung. An den beiden Enden der Kantenfläche 10 liegen nicht Zahnflanken bzw. Zähne 22, sondern Abschnitte von an die äußersten Zähne anschließenden Bodenflächen 25 nur einseitig von Flanken begrenzter Zahnlücken, wobei die Breite dieser endseitigen Bodenflächen 25 größer als die Hälfte der Breite der mittleren Bodenflächen sowie vorzugsweise kleiner als die Breite einer solchen Bodenfläche ist. Die Kantenfläche 10 bzw. die Fräskanten 11,12 bzw. die Zahnung 21 sind symmetrisch zu einer zur Platten-Mittelebene 19 sowie zur Kantenfläche 10 rechtwinkligen Mittelebene 27 ausgebildet, die durch die Mitte der Länge 26 der Kantenfläche 10 geht. Zu dieser Mittelebene 27 ist die gesamte Fräsplatte 3 spiegelsymmetrisch ausgebildet.

In den Fig. 3 und 5 ist strichpunktiert die zylindrische Innenkontur eines Werkstückes 41 angedeutet, in die ein Innengewinde gefräst werden soll. Diese mit dem Innen- bzw. Kerndurchmesser übereinstimmende Innenkontur ist in einer Lage dargestellt, in welcher sie gegenüber der für den Fräseinsatz bestimmten Fräskante 11 noch auf Gewindetiefe gefahren werden muß, wobei das Fräswerkzeug bzw. die Fräsplatte 3 bzw. die Fräskante 11 in der Stellung dargestellt ist, in welcher sie bei Rotation um die Fräsachse 5 am tiefsten in das Werkstück eingreift, d.h. daß die Fräskante 11 bzw. die zugehörige Schneidenbrustfläche 17 in der gemeinsamen Axialebene von Fräsachse 5 und Werkstückachse 42 liegt. Der Schneidenwinkel der Fräskante 11 ist mit 28 bezeichnet und beträgt im dargestellten Ausführungsbeispiel 75°. Gegenüber dem Werkstück 41 ergibt sich in dieser Stellung ein mittlerer Freiwinkel 29 von etwa 15° und auch der Schneiden-Brustwinkel 30 beträgt etwa 15°.

Die Spanleitfläche 15 bzw. 16 ist jeweils durchgehend glattflächig, jedoch von der Zahnung 21 etwa auf der Hälfte ihrer Breite durchsetzt und weist außer dem die jeweilige Schneidenbrustfläche 17 bzw. 18 bildenden Abschnitt an der von der Kantenfläche 10 abgekehrten Seite einen relativ steil zur zugehörigen Plattenseite 13,14 ansteigenden Abschnitt 31 auf, wobei diese beiden im stumpfen Winkel von etwa 115° zueinander liegenden Abschnitte im Querschnitt tangential über eine etwa teilkreisförmige bzw. kleiner als viertelkreisförmige Ausrundung 32 ineinander übergehen, deren Mittelachse etwa in der Ebene der zugehörigen Plattenseite 13 bzw. 14 in größerer Entfernung von der Kantenfläche 10 als von der davon abgekehrten Begrenzung 35 der Spanleitfläche 15 bzw. 16 liegt. An dieser scharfkantigen Begrenzung 35 geht der Abschnitt 31 der Spanleitfläche 15 bzw. 16 im Querschnitt stumpfwinklig in die zugehörige Ebene und zur Platten-Mittelebene 19 parallele Plattenseite 13 bzw. 14 über. Durch die Begrenzung 35 ist auch die Gesamtbreite 33 der Spanleitfläche 15 bzw. 16 bestimmt, deren tiefste Stelle 34 im Bereich der Ausrundung 32 liegt und die dünnste Zone der Fräsplatte 3 bestimmt.

Die im spitzen Winkel an die Kantenfläche 10 anschließenden, im wesentlichen ebenen Kantenflächen 36 der Fräsplatte 3 liegen spiegelsymmetrisch beiderseits der Mittelebene 27 und im spitzen Winkel zueinander, wobei ihre Länge etwa um ein Drittel kürzer als die Länge 26 der Kantenfläche 10 ist. Die stumpfwinklig an diese Kantenflächen 36 anschließende, von der Kantenfläche 10 abgekehrte und zu dieser parallele Kantenfläche 37 ist ebenfalls eben, dient jedoch nicht zur Anlage bzw. Ausrichtung im Frässchaft 2, d.h., daß sie in diesem im wesentlichen berührungsfrei liegt; ihre Länge beträgt etwa ein Drittel der Länge 26 der Kantenfläche 10. Alle Kantenflächen 10,36,37 liegen rechtwinklig zu den Ebenen 38,39 der beiden Plattenseiten 13,14, wobei die Kanten der Kantenflächen 36, 37 auf beiden Plattenseiten 13, 14 derart angefast sind, daß sie an den Enden der Spanleitflächen 15, 16 mit diesen Anfasungen nicht bis zur jeweiligen Ausrundung 32, sondern höchstens nur etwa bis zur Hälfte der Höhe des zugehörigen ansteigenden Abschnittes 31 reichen. Die durch die Spitzen und die Bodenkanten der Fräskante 11 gehende Axialebene des Fräswerkzeuges ist mit 40 bezeichnet.

Die Fräsplatte 3 ist unmittelbar benachbart zu den Spanleitflächen 15, 16 von einer zentrisch symmetrischen Durchgangsöffnung 43 durchsetzt, deren Mittelachse rechtwinklig zur Platten-Mittelebene 19 in der Mittelebene 27 steht und gegenüber der Kantenfläche 37 einen beispielsweise etwa um ein Viertel kleineren Abstand als gegenüber der Ebene der Zahnscheitel 24 hat. Die Durchgangsöffnung 43 weist bzw. bildet an beiden Plattenseiten 13, 14 spitzwinklig kegelstumpfförmige Endabschnitte 44, 45 von 60° Kegelwinkel, die hinsichtlich ihres größten Durchmessers sowie hinsichtlich des Kegelwinkels gleich sind und auch gleich große Axialerstreckung von etwa einem Drittel der Plattendicke 20 haben können. Zwischen diesen beiden Endabschnitten 44,45 ist ein zylindrischer, im Durchmesser dem kleinsten Durchmesser mindestens eines Endabschnittes 44 entsprechender Mittelabschnitt 46 vorgesehen, wobei der Durchmesser dieses Mittelabschnittes 46 gegenüber dem Schaft des Spannbolzens 4 ebenso größer ist, wie der Durchmesser des jeweiligen Endabschnittes 44, 45 gegenüber dem mit gleichem Kegelwinkel kegelstumpfförmigen Kopf des Spannbolzens 4, so daß dieser in Richtung zur Kantenfläche 37 versetzt exzentrisch liegend in die Durchgangsöffnung 43 eingreifen kann und ausschließlich mit seinem Kopf an der von der Kantenfläche 10 abgekehrten Seite des zugehörigen Endabschnittes 44, 45 linienförmig anliegt; dadurch wird beim Festziehen des Spannbolzens 4 auf die Fräsplatte 3 außer einer gegen die Ausrichtfläche 7 gerichteten auch eine die Fräsplatte 3 parallel zu dieser Ausrichtfläche 7 in die Aufnahme 6 hineinziehende Kraft ausgeübt, so daß die Fräsplatte 3 durch Festziehen eines einzigen Spannbolzens 4 auch unter Pressung gegen die Ausrichtflächen 8 gespannt und dadurch genau bestimmbar justiert wird. Im dargestellten Ausführungsbeispiel liegt zwischen dem zylindrischen Mittelabschnitt 46 und einem kürzeren der beiden Endabschnitte 44, 45 noch ein zylindrischer Zwischenabschnitt 47 der Durchgangsöffnung 43, dessen Durchmesser geringfügig größer als der des Mittelabschnittes 46 und gleich dem kleinsten Durchmesser des zugehörigen Endabschnittes 45 ist, dessen Axialerstreckung jedoch wesentlich kleiner als die aller übrigen Abschnitte ist. Der Zwischenabschnitt 47 bildet eine zur Mittelachse der Durchgangsöffnung 43 rechtwinklige Schulterfläche sowie eine an diese anschließende zylindrische Zentrierfläche und kann zur genauen Ausrichtung der Fräsplatte 3 rechtwinklig zur Platten-Mittelebene 19 sowie in allen Richtungen radial zur Mittelachse der Durchgangsöffnung 43 beipsielsweise beim Bearbeiten, Nachschärfen und Ähnlichem der Fräsplatte 3 herangezogen werden. Es ist auch denkbar, derartige Zwischenabschnitte 47 an beiden Enden des Mittelabschnittes 46 bzw. an beiden inneren Enden der Endabschnitte 44 vorzusehen, so daß auch die Durchgangsöffnung 43 spiegelsymmetrisch zur Platten-Mittelebene 19 ausgebildet ist. Von den Kantenflächen 36 weist die Durchgangsöffnung 43 etwa gleichen Abstand wie von der Kantenfläche 37 auf.

## Patentansprüche

1. Gewinde-Fräswerkzeug (1) mit einem eine Rotations-Fräsachse (5) aufweisenden Fräserschaft (2), der eine Aufnahme (6) mit Ausrichtflächen (7, 8) für die Anlage einer einteilig vielzahnigen, als Wendeplatte ausgebildeten Gewinde-Fräsplatte (3) aufweist, die entsprechend dem Gewindeprofil an mindestens einer Kantenfläche (10) im wesentlichen über die Plattendicke (20) mit einer Zahnung (21) versehen ist sowie mit einer Plattenkante der jeweiligen Kantenfläche (10) eine Gewinde-Fräskante (11, 12) bildet, die an der zugehörigen ersten Plattenseite (13, 14) liegt und von einer Schneidenbrustfläche (17, 18) begrenzt ist, welche durch eine gegenüber der Plattenebene (19) geneigte Spanleitfläche (15, 16) bildet ist, dadurch gekennzeichnet, daß auch an der zweiten Plattenseite (14, 13) der Fräsplatte (3) mindestens eine gezahnte Gewinde-Fräskante (12, 11) vorgesehen ist, daß auch an der zweiten Plattenseite (14, 13) für die jeweilige Gewinde-Fräskante (12, 11) eine Schneidenbrustfläche (18, 17) vorgesehen ist, daß die an der zweiten Plattenseite (14, 13) liegende Schneidenbrustfläche (18, 17) durch eine gegenüber der Plattenebene (19) der Fräsplatte (3) geneigte Spanleitfläche (16, 15) gebildet ist und daß ein und dieselbe Zahnung (21) an beiden Plattenseiten jeweils eine Gewinde-Fräskante (11, 12) bildet.

2. Fräswerkzeug nach Anspruch 1, dadurch gekennzeichnet, daß der jeweiligen Gewinde-Fräskante (12, 13) an der Fräsplatte (3) mindestens eine Ausricht-Anlage (36) für die Ausrichtflächen (7, 8) der Aufnahme (6) zugeordnet ist und daß mindestens zwei Gewinde-Fräskanten (12, 13) hinsichtlich ihrer Ausricht-Anlageflächen (36) wendegleich angeordnet sind.

3. Fräswerkzeug nach Anspruch 1 oder 2, dadurch gekennzeichnet, daß zwei gleiche Gewinde-Fräskanten (11, 12) durch die beiden Plattenkanten mindestens einer Kantenfläche (10) gebildet sind und daß die Spanleitflächen (15, 16) an beiden Plattenseiten (13, 14) spiegelsymmetrisch gleich ausgebildet sind, wobei vorzugsweise die Zahnung (21) der Kantenfläche (10) über die Plattendicke (20), insbesondere rechtwinklig zur Plattenebene (19) im wesentlichen gleichförmig durchgeht bzw. die Scheitel (24) und/oder die von der spitzen Form abweichenden Bodenflächen (25) der Zahnung (21) der Kantenfläche (10) jeweils in einer zur Plattenebene (19) rechtwinkligen Ebene liegen.

4. Fräswerkzeug nach einem der vorhergehenden Ansprüche, dadurch gekennzeichnet, daß die Zahnung (21) über die Länge der Kantenfläche (10) gleichförmig durchgeht, insbesondere spiegelsymmetrisch zur Mitte der Länge der zugehörigen Kantenfläche (10) ausgebildet ist und daß vorzugsweise mindestens ein Ende der Kantenfläche (10) wenigstens durch einen Abschnitt einer Bodenfläche (25) gebildet ist.

5. Fräswerkzeug nach einem der vorhergehenden Ansprüche, dadurch gekennzeichnet, daß die Fräskante (11, 12) einen spitzen Schneidwinkel (28) zwischen 60° und 85°, insbesondere etwa 75° aufweist und/oder daß die Spanleitfläche (15, 16) im Anschluß an die Fräskante (11, 12) im wesentlichen unter einem spitzen, sich zur zugehörigen Kantenfläche (10) öffnenden Winkel (30) zwischen 5° und 30°, vorzugsweise etwa 15°, zu der zwischen den beiden Plattenseiten (13, 14) liegenden Platten-Mittelebene (19) liegt.

6. Fräswerkzeug nach einem der vorhergehenden Ansprüche, dadurch gekennzeichnet, daß die Spanleitfläche (15, 16) im Anschluß an die Fräskante (11), insbesondere über den größten Teil ihrer Breite bzw. bis über die Bodenflächen (25) der Zahnung (21) hinaus im wesentlichen eben ausgebildet ist und/oder daß die Spanleitflächen (15, 16) im Abstand von der Fräskante (11, 12) zur zugehörigen Plattenseite (13, 14) unter einem gegenüber dem Neigungswinkel (30) im Bereich der Fräskante (11, 12) größeren Winkel von insbesondere etwa 45° ansteigt, wobei vorzugsweise die Spanleitfläche (15, 16) im Abstand von der Fräskante (11, 12) im wesentlichen tangential in eine konkave Ausrundung (32) übergeht, deren Mittelachse vorzugsweise etwa in der Ebene der zugehörigen Plattenseite (13, 14) liegt.

7. Fräswerkzeug nach einem der vorhergehenden Ansprüche, dadurch gekennzeichnet, daß die Gesamtbreite der Spanleitfäche (15, 16) etwa halb so groß wie die Plattendicke (20) der Gewinde-Fräsplatte (3) ist und daß vorzugsweise die tiefste Stelle (34) der Spanleitfläche (15, 16) von den Bodenflächen (25) der Zahnung (21) etwa gleich weit wie von der von der Zahnung (21) entfernten Begrenzung (35) der Spanleitfläche (15, 16) entfernt ist.

8. Fräswerkzeug nach einem der vorhergehenden Ansprüche, dadurch gekennzeichnet, daß die Fräskante (11, 12) an der längsten Kantenfläche (10) der vorzugsweise trapezförmigen Fräsplatte (3) vorgesehen ist und daß die Spanleitfläche (15, 16) über die gesamte Länge der zugehörigen Kantenfläche (10) durchgeht.

9. Fräswerkzeug nach einem der vorhergehenden Ansprüche, dadurch gekennzeichnet, daß die Fräsplatte (3) unmittelbar benachbart zur Spanleitfläche (15, 16) von einer Durchgangsöffnung (43) für einen Spannbolzen (4) durchsetzt ist, die vorzugsweise zu beiden Plattenseiten (13, 14) gleichförmig kegelstumpfförmig derart erweitert ist, daß ihre in der jeweiligen Plattenseite (13, 14) liegende Begrenzungskante nahezu tangential von der Spanleitfläche (15, 16) berührt ist.

10. Fräswerkzeug nach einem der vorhergehenden Ansprüche, dadurch gekennzeichnet, daß die Aufnahme (6) für die Fräsplatte (3) durch eine an deren Aussenform angepaßte Vertiefung im Fräserschaft (2) gebildet ist, die vorzugsweise mit ihrer Bodenfläche und zwei im Winkel zueinander liegenden Randflächen die Ausrichtflächen (7, 8) für die Fräsplatte (3) bildet und/oder trapezförmig ist.

11. Fräswerkzeug nach einem der vorhergehenden Ansprüche, dadurch gekennzeichnet, daß die Fräsachse (5) zwischen den Ebenen (38, 39) der Plattenseiten (13, 14) der Fräsplatte (3), vorzugsweise etwa in der Ebene der Schneidenbrustfläche (17, 18) der in Fräslage stehenden Fräskante (11) und/oder etwa in der Ebene der von der gezahnten Kantenfläche (10) abgekehrten Kantenfläche (37) der Fräsplatte (3) liegt.

12. Gewinde-Fräsplatte, insbesondere für ein Fräswerkzeug (1) nach einem der vorhergehenden Ansprüche, die beiderseits einer Plattenebene (19) zwei voneinander abgekehrte Plattenseiten (13, 14) bildet und entsprechend einem Gewindeprofil an mindestens einer Kantenfläche (10) mit einer Zahnung (21) versehen ist sowie mit mindestens zwei Plattenkanten jeweils eine gezahnte Gewinde-Fräskante (11, 12) mit Schneidenbrustfläche (17, 18) bildet, von denen eine durch eine gegenüber der Plattenebene (19) geneigte Spanleitfläche (15, 16) gebildet ist, wobei jeder der gezahnten Gewinde-Fräskanten (11, 12) wenigstens eine Ausricht-Anlagefläche (36) für Ausrichtflächen (7, 8) einer Fräzplatten-Aufnahme (6) zugeordnet ist, dadurch gekennzeichnet, daß an beiden Plattenseiten (13, 14) mindestens eine gezahnte Gewinde-Fräskante (12, 13) mit jeweils gegenüber der Plattenebene (19) geneigter Schneidenbrustfläche (17, 18) vorgesehen ist, daß ein und dieselbe Zahnung (21) an beiden Plattenseiten (13, 14) jeweils eine Gewinde-Fräskante (11, 12) mit geneigter Spanleitfläche (15, 16) bildet, und daß insbesondere mindestens zwei Gewinde-Fräskanten (11, 12) hinsichtlich ihrer Ausricht-Anlageflächen (36) wendegleich angeordnet sind.

## Claims

1. Thread milling cutter (1) with a cutter shank (2) having a rotation milling axis (5) and which has a receptacle (6) with orientation surfaces (7,8) for the engagement of a one-piece, multitooth thread milling plate (3) constructed as a turnover plate and which in accordance with the thread profile is toothed substantially over the entire plate thickness (20) on at least one edge face (10) and forms with a plate edge of the particular edge face (10) a thread milling edge (11,12) which is located on the associated first plate side (13,14) and is bounded by a rake surface (17,18), which is formed by a chip surface (15,16) inclined with respect to plate plane (19), characterized in that also on the second plate side (14,13) of the milling plate (3) is provided at least one toothed thread milling edge (12,11), that also on the second plate side (14,13) for the particular thread milling edge (12,11) is provided a rake surface (18,17) by a chip surface (16,15) inclined with respect to the plate plane (19) of the milling plate (3) and that the same tooth system (21) on both plate sides in each case forms a thread milling edge (11,12).

2. Milling cutter according to claim 1, characterized in that the particular thread milling edge (12,13) on the cutting plate (3) has associated with it at least one orientation edge face (36) for the orientation faces (7,8) of the receptacle (6) and that at least two thread cutting edges (12,13) are arranged in turn-identical manner with respect to their orientation edge faces (36).

3. Milling cutter according to claim 1 or 2, characterized in that two identical thread milling edges (11,12) are formed by the two plate edges of at least one edge face (10) and that the chip surfaces (15,16) on both plate sides (13,14) are identically constructed in mirror symmetrical manner and preferably the tooth system (21) of edge face (10) passes in substantially uniform manner over the plate thickness (20), in particular at right angles to the plate plane (19) or the tops (24) and/or the bottom faces (25) differing form the pointed form of tooth system (21) of edge face (10) are in each case located in a plane at right angles to plate plane (19).

4. Milling cutter according to one of the preceding claims, characterized in that the tooth system (21) passes uniformly over the length of edge face (10) in particular in mirror symmetrical manner to the centre of the length of the associated edge face (10) and that preferably at least one end of edge face (10) is formed by one portion of a bottom face (25).

5. Milling cutter according to one of the preceding claims, characterized in that the milling edge (11,12) has an acute rake angle (28) between 60 and 85° , particularly approximately 75° and/or that the chip surface (15,16) connecting onto the milling edge (11, 12) is under an acute angle (30), opening towards the associated edge face (10), of between 5 and 30°, preferably approximately 15°, to the plate middle plane (19) located between the two plate sides (13,14).

6. Milling cutter according to one of the preceding claims, characterized in that the chip surface (15,16), connecting onto the milling edge (11) is substantially planar particularly over most of its width or over the bottom face (25) of tooth system (21) and/or that the chip surfaces (15,16) with the spacing from milling edge (11,12) to the associated plate side (13,14) rise by an angle greater by in particular approximately 45° than the angle of inclination (30) in the vicinity of milling edge (11,12) and preferably the chip surface (15,16) in the spacing from milling edge (11,12) passes substantially tangentially into a concave fillet (32), whose central axis is preferably approximately in the plane of the associated plate side (13,14).

7. Milling cutter according to one of the preceding claims, characterized in that the total width of the chip surface (15,16) is roughly half as large as the plate thickness (20) of the thread milling plate (3) and that preferably the deepest point (34) of the chip surface (15,16) is at roughly the same distance from the bottom faces (25) of tooth system (21) as from the boundary (35) of chip surface (15,16) remote from tooth system (21).

8. Milling cutter according to one of the preceding claims, characterized in that the milling edge (11,12) is provided on the longest edge face (10) of the preferably trapezoidal milling plate (3) and that the chip surface (15,16) passes over the entire length of the associated edge face (10).

9. Milling cutter according to one of the preceding claims, characterized in that the milling plate (3) immediately adjacent to chip surface (15,16) is traversed by a through hole (43) for a clamping bolt (4), which is preferably uniformly widened in frustum-shaped manner on both plate sides (13,14), in such away that its boundary edge located in the particular plate side (13,14) is virtually tangentially contacted by chip surface (15,16).

10. Milling cutter according to one of the preceding claims, characterized in that the receptacle (6) for the milling plate (3) is formed by a depression adapted to the external shape thereof in the cutter shank (2) and preferably forms with its bottom face and two edge faces which are at an angle to one another the orientation surfaces (7,8) for milling plate (3) and/or is trapezoidal.

11. Milling cutter according to one of the preceding claims, characterized in that the milling axis (5) between the planes (38,39) of plate sides (13,14) of milling plate (3) is preferably roughly in the plane of the rake surface (17,18) of the milling edge (11) in the milling position and/or approximately in the plane of the edge face (37) of milling plate (3) remote from the toothed edge face (10).

12. Thread milling plate, particularly for a thread milling cutter (1) according to one of the preceding claims, which forms from either side of a plate plane (19) two remote plate sides (13,14) and corresponding to a thread profile is provided on at least one edge face (10) with a tooth system (21), as well as with at least two plate edges forms in each case a toothed thread milling edge (11,12) with a rake surface (17,18), whereof one is formed by a chip surface (15,16) inclined with respect to the plate plane (19), each of the toothed thread milling edges (11,12) having associated with it at least one orientation edge face (36) for orientation faces (7,8) of a milling plate receptacle (6), characterized in that on both plate sides (13,14) is provided at least one toothed thread milling edge (12,13) with a rake surface (17,18) inclined with respect to the plate plane (19), that the same tooth system (21) on both plate sides (13,14) in each case forms a thread milling edge (11,12) with inclined chip surface (15,16) and that in particular at least two thread milling edges (11,12) are arranged in turn-identical manner with respect to their orientation edge faces (36).

## Revendications

1. Outil de fraisage de filetages (1), comprenant une tige de fraise (2) présentant un axe de rotation-fraisage (5) et comportant un logement (6) avec des faces d'alignement (7, 8) pour l'application d'une plaquette de fraisage de filets (3) qui est d'un seul tenant, porte une pluralité de dents et est réalisée comme une plaquette réversible, qui est pourvue, selon le profil du filetage à réaliser, sur au moins une face latérale ou tranche (10), d'une denture (21) s'étendant essentiellement sur l'épaisseur (20) de la plaquette et forme, par une arête de plaquette de la tranche (10) concernée, une arête de fraisage de filets (11, 12) située sur une première face de plaquette (13, 14) coordonnée et délimitée par une face de dépouille (17, 18) formée par une surface de guidage de copeau (15, 16) inclinée par rapport au plan (19) de la plaquette, caractérisé en ce qu'au moins une arête dentée de fraisage de filets (12, 11) est prévue également sur la seconde face (14, 13) de la plaquette de fraisage (3), qu'une face de dépouille (18, 17) est prévue également sur la seconde face (14, 13) de la plaquette pour l'arête de fraisage de filets (12, 11) concernée, que la face de dépouille (18, 17) située sur la seconde face (14, 13) de la plaquette est formée par une surface de guidage de copeau (16, 15) inclinée par rapport au plan (19) de la plaquette de fraisage (3) et qu'une seule et même denture (21) forme une arête de fraisage de filets (11, 12) sur chacune des deux faces de la plaquette.

2. Outil de fraisage selon la revendication 1, caractérisé en ce qu'au moins un appui d'alignement (36), destiné à coopérer avec les faces d'alignement (7, 8) du logement (6), est coordonné à l'arête de fraisage de filets (12, 13) correspondante sur la plaquette de fraisage (3) et qu'au moins deux arêtes de fraisage de filets (12, 13) sont agencées dans une disposition réversible en ce qui concerne leurs faces d'alignement-appui (36).

3. Outil de fraisage selon la revendication 1 ou 2, caractérisé en ce que deux arêtes de fraisage de filets identiques (11, 12) sont formées par les deux faces de plaquette d'au moins une tranche (10) et que les surfaces de guidage de copeaux (15, 16) sur les deux faces (13, 14) de la plaquette sont réalisées de façon identique à symétrie spéculaire, la denture (21) de la tranche (10) s'étendant de préférence sur l'épaisseur (20) de la plaquette, en particulier à angle droit par rapport au plan (19) de la plaquette et essentiellement de façon uniforme, ou les sommets (24) et/ou les surfaces de fond (25), s'écartant d'une forme pointue, de la denture (21) de la tranche (10) étant situés chaque fois dans un plan perpendiculaire au plan (19) de la plaquette.

4. Outil de fraisage selon une des revendications précédentes, caractérisé en ce que la denture (21) s'étend de façon uniforme sur la longueur de la tranche (10) et est notamment réalisée à symétrie spéculaire par rapport au milieu de la longueur de la tranche (10) correspondante, et que, de préférence, au moins une extrémité de la tranche (10) est formée par au moins un segment d'une surface de fond (25).

5. Outil de fraisage selon une des revendications précédentes, caractérisé en ce que l'arête de fraisage (11, 12) présente un angle de coupe aigu (28) compris entre 60° et 85°, angle qui est notamment d'environ 75°, et/ou que la surface de guidage de copeau (15, 16) forme essentiellement, à la suite de l'arête de fraisage (11, 12), un angle aigu (30), s'ouvrant vers la tranche (10) coordonnée et compris entre 5° et 30°, angle qui est de préférence d'environ 15°, avec le plan (19) du milieu de la plaquette, situé entre les deux faces (13, 14) de la plaquette.

6. Outil de fraisage selon une des revendications précédentes, caractérisé en ce que, à la suite de l'arête de fraisage (11), la surface de guidage de copeau (15, 16) est essentiellement réalisée plane, en particulier sur la majeure partie de sa largeur ou jusqu'au-delà des surfaces de fond (25) de la denture (21), et/ou que les surfaces de guidage de copeaux (15, 16) montent, à distance de l'arête de fraisage (11, 12) et par rapport à la face (13, 14) correspondante de la plaquette, sous un angle plus grand que l'angle d'inclinaison (30) dans la région de l'arête de fraisage (11, 12), en particulier sous un angle d'environ 45°, la surface de guidage de copeau (15, 16) se raccordant de préférence, à distance de l'arête de fraisage (11, 12), pour l'essentiel tangentiellement à un arrondi concave (32) dont l'axe médian est de préférence situé à peu près dans le plan de la face (13, 14) correspondante de la plaquette.

7. Outil de fraisage selon une des revendications précédentes, caractérisé en ce que la largeur totale de la surface de guidage de copeau (15, 16) correspond à peu près à la moitié de l'épaisseur (20) de la plaquette de fraisage de filets (3) et que, de préférence, le point le plus profond (34) de la surface de guidage de copeau (15, 16) est situé à peu près à la même distance des surfaces de fond (25) de la denture (21) que de la limite (35) de la surface de guidage de copeau (15, 16) éloignée de la denture (21).

8. Outil de fraisage selon une des revendications précédentes, caractérisé en ce que l'arête de fraisage (11, 12) est prévu sur la tranche (10) la plus longue de la plaquette de fraisage (3), ayant de préférence une forme trapézoïdale, et que la surface de guidage de copeau (15, 16) s'étend sur toute la longueur de la tranche (10) correspondante.

9. Outil de fraisage selon une des revendications précédentes, caractérisé en ce que la plaquette de fraisage (3) est traversée, à proximité immédiate de la surface de guidage de copeau (15, 16), d'un trou de passage (43) pour une vis de serrage (4), trou qui s'évase de préférence uniformément en cône tronqué vers les deux faces (13, 14) de la plaquette, de manière que la surface de guidage de copeau (15, 16) touche presque tangentiellement l'arête de délimitation située dans la face (13, 14) correspondante de la plaquette.

10. Outil de fraisage selon une des revendications précédentes, caractérisé en ce que le logement (6) pour la plaquette de fraisage (3) est constitué par un creux ménagé dans la tige (2) de la fraise et qui est adapté à la forme extérieure de la plaquette, logement qui forme de préférence, par sa surface de fond et deux faces de bord ou faces latérales définissant un angle entre elles, les faces d'alignement (7, 8) pour la plaquette de fraisage (3) et/ou possède une forme trapézoïdale.

11. Outil de fraisage selon une des revendications précédentes, caractérisé en ce que l'axe de fraisage (5) est situé entre les plans (38, 39) des faces (13, 14) de la plaquette de fraisage (3), de préférence a peu près dans le plan de la face de dépouille (17, 18) de l'arête de fraisage (11) occupant la position de fraisage et/ou à peu près dans le plan de la tranche (37) éloignée de la tranche dentée (10) de la plaquette (3).

12. Plaquette de fraisage de filets, en particulier pour un outil de fraisage (1) selon une des revendications précédentes, possédant des deux côtés d'un plan de plaquette (19) deux faces de plaquette (13, 14) mutuellement éloignées, pourvue, en conformité avec un profil de filetage à réaliser, d'une denture (21) sur au moins une face latérale du tranche (10), et formant, par chacune d'au moins deux arêtes de plaquette, une arête dentée de fraisage de filets (11, 12) avec une face de dépouille (17, 18), dont l'une est formée par une surface de guidage de copeau (15, 16) inclinée par rapport au plan (19) de la plaquette, avec coordination, à chacune des arêtes dentées de fraisage de filets (11, 12), d'au moins une face d'alignement-appui (36) destinée à coopérer avec des faces d'alignement (7, 8) d'un logement (6) de plaquette de fraisage, caractérisée en ce qu'au moins une arête dentée de fraisage de filets (12, 13) avec une face de dépouille (17, 18) inclinée par rapport au plan (19) de la plaquette, est prévue sur les deux faces (13, 14) de la plaquette, qu'une seule et même denture (21) forme, sur chacune des deux faces (13, 14) de la plaquette, une arête de fraisage de filets (11, 12) avec une surface de guidage de copeau (15, 16) inclinée, et que, en particulier, au moins deux arêtes de fraisage de filets (11, 12) sont agencées dans une disposition réversible en ce qui concerne leurs faces d'alignement-appui (36).
